# EUROPEAN PATENT APPLICATION

(11) **EP 1 568 645 A1**
(43) Date of publication of application: **31.08.2005**
(21) Application number: 02788717.3
(22) Date of filing: 04.12.2002
(51) Int. Cl.: B66B 11/08, B66D 5/08, F16D 51/10, F16D 65/27

(54) **BRAKE MECHANISM FOR HOIST**

(71) Applicant: MITSUBISHI DENKI KABUSHIKI KAISHA, Tokyo 100-8310 (JP)
(72) Inventor: Iida, Yasumasa, Mitsubishi Elect. Engin. Co., Ltd, Tokyo 100-0004 (JP)
(74) Representative: HOFFMANN EITLE
(86) International application number: PCT/JP2002/012706
(87) International publication number: WO 2004/050527

(57) **Abstract**

In a brake mechanism (110) for a traction machine, a plurality of braking members (20) are arranged so as to face to an internal wall of a bowl-shaped portion (12) of a brake drum (2) whose one surface is open. An elastic member (30) is provided which is connected to each of the braking members (20) and is arranged so that an elastic force acts in a radial direction from the center of the bowl-shaped portion (12) and in the direction such that the braking member (20) is pressed on the internal wall of the bowl-shaped portion. Also, the brake mechanism (110) includes a supporting member (8) for fixing a portion of the elastic member (30), the portion being opposite to a portion in which the elastic member (30) is connected to the braking member (20), and a control mechanism (42, 50) for controlling the elastic force by generating a resisting force opposing to the elastic force.

## Description

### Technical Field

The present invention relates to a brake mechanism for a traction machine. More particularly, it relates to a brake mechanism suitably used in a traction machine for elevating a cab with a rope being wound in an elevator system.

### Background Art

As is described in Japanese Patent Laid-Open No. 2000-289955, a conventional brake mechanism for a traction machine is provided in a brake drum. The brake mechanism includes brake arms arranged symmetrically in the right-and-left direction. For each of the brake arms, one end on the upper side thereof is supported on a support plate with a support pin. At the lower part of the support plate is fixed a brake spring, and both ends of the brake spring are in contact with the lower end portion of the brake arm. Near the support pin of the brake arm, a brake lining is installed via a brake shoe so as to face to a brake surface on the inside of the brake drum. Also, an electromagnet is arranged near an intermediate portion of the brake arm.

In the conventional brake mechanism constructed as described above, by bringing the brake lining into contact with the brake surface of the brake drum, the brake is operated to stop rotation of the traction machine. Inversely, by separating the brake lining from the brake drum, the brake is released to make the traction machine in a rotatable state. The contact and separation of the brake lining are accomplished by moving the two brake arms installed to the brake lining with the support pin being used as a supporting point. The brake arm pushes the brake lining to the outside by means of spring force of the brake spring pushing the brake arm to the outside, and pulls the brake lining to the inside by means of an attraction force of the electromagnet attracting the brake arm to the inside. That is, when the brake lining is pressed on the brake drum, the attraction force of the electromagnet is released to move the brake arm in the direction such as to open on the brake drum side by the spring force of the brake spring. On the other hand, when the brake lining is separated from the brake drum, a current is caused to flow in the electromagnet to generate an attraction force, by which the brake arm is attracted toward the center.

As described above, two brake arms are arranged symmetrically in the right-and-left direction, and one brake lining is provided on each of the brake arms so as to move in association with the movement of the brake arm. For this brake mechanism, therefore, the brake is operated by two brake linings.

For this reason, in order to secure a braking force necessary for an elevator system, it is necessary to increase the force for pressing each brake lining on the brake drum, and therefore the spring force of the brake spring pressing the brake arm must be increased.

However, in order to increase the spring force of the brake spring, it is necessary to take measures such as to increase the diameter of a spring wire or to increase the outside diameter of spring. Therefore, the brake spring becomes thick or large in size, and accordingly the brake mechanism and hence the whole of the traction machine may become thick or large in size.

Also, if the spring force of the brake spring increases, the force acting on the brake arm also increases. Therefore, the brake arm deflects, and thereby the force pressing the brake lining on the brake drum may be decreased. To avoid this problem, it is thought that the rigidity of the brake arm is increased. However, in order to increase the rigidity of the brake arm, the brake arm must be made thick in the direction in which the load acts. Therefore, the brake mechanism and hence the whole of the traction machine may become large in size.

Further, in the case where the spring force of the brake spring is increased, the attraction force that opposes to the spring force must also be increased. However, in order to increase the attraction force, the diameter of an electromagnet wire must be increased, or the number of turns of the wire must be increased. Therefore, the size of the electromagnet increases, and thus the downsizing of the traction machine is limited. Also, if the wire diameter is increased or the number of turns is increased, necessary electric power also increases.

In the elevator system, quietness is demanded. If the spring force of the brake spring is increased, collision noise generated when the brake lining collides with the brake drum may sometimes become loud.

In the brake mechanism constructed as described above, the brake arm moves with the support pin, which supports one end of the brake arm, being used as a supporting point. Therefore, the clearance between the brake lining and the brake drum and the clearance between an armature and the electromagnet are smaller on the side closer to the pin and larger on the side more distant from the pin. On the other hand, the necessary minimum clearance between the brake lining and the brake drum is determined on the side closer to the pin. Therefore, the clearance on the side more distant from the pin is larger than the necessary minimum clearance, so that the collision noise becomes louder in this portion.

### Disclosure of the Invention

The present invention has been made to solve the above described problems, and accordingly an object thereof is to provide an improved brake mechanism for a traction machine to achieve downsizing, quietness, etc. of the traction machine.

To achieve the above object, the brake mechanism for a traction machine in accordance with the present invention includes a plurality of braking members arranged so as to face to the internal wall of a bowl-shaped portion of a brake drum whose one surface is open; an elastic member which is connected to each of the braking members and is arranged so that an elastic force acts in the radial direction from the center of the bowl-shaped portion and in the direction such that the braking member is pressed on the internal wall of the bowl-shaped portion; a supporting member for fixing a portion of the elastic member, the portion being opposite to a portion in which the elastic member is connected to the braking member; and a control mechanism for controlling the elastic force by generating a resisting force opposing to the elastic force.

By this configuration, the braking force borne by each of the braking members can be decreased as compared with the conventional brake mechanism, by which the elastic member, an electromagnet, and the like can be made smaller in size. Also, collision noise generated when the braking member collides with the brake surface can be reduced.

### Brief Description of the Drawings

Figure 1 is a schematic sectional view for illustrating a brake mechanism for a traction machine in accordance with the embodiment of the present invention.
Figure 2 is a front view for illustrating the brake mechanism for the traction machine in accordance with the embodiment of the present invention.
Figures 3 is a sectional view of the brake mechanism shown in Figure 1, taken along line A-A' of Figure 1.
Figures 4 is a sectional view of the brake mechanism shown in Figure 1, taken along line B-B' of Figure 1.
Figure 5 is a schematic view for illustrating a lever portion for the traction machine in accordance with the embodiment of the present invention.
Figure 6 is a schematic sectional view for illustrating the excited state in which the brake of the traction machine in accordance with the embodiment of the present invention is released.

### Best Mode for Carrying Out the Invention

An embodiment of the present invention will now be described with reference to the accompanying drawings. In the figures, the same reference numerals are applied to the same or equivalent elements, and the explanation thereof will be simplified or omitted.

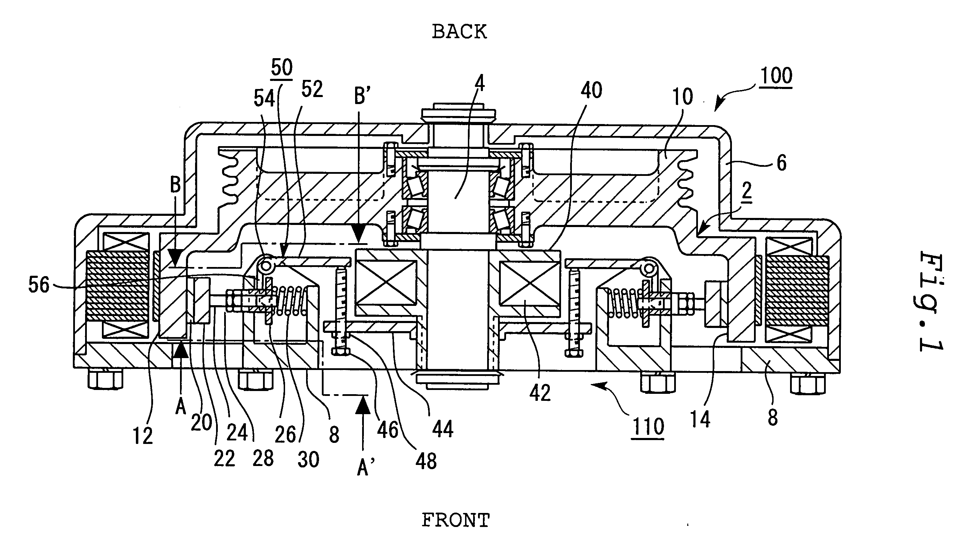

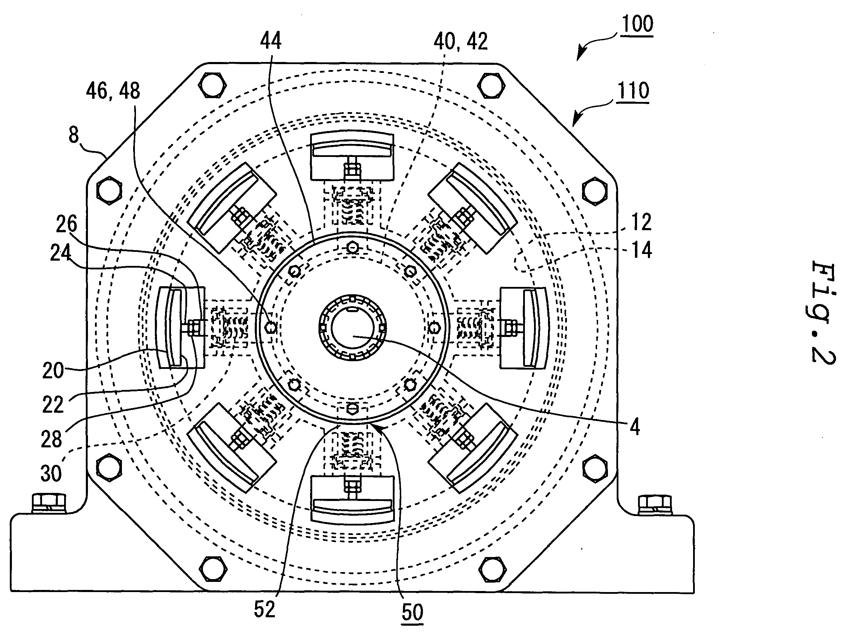

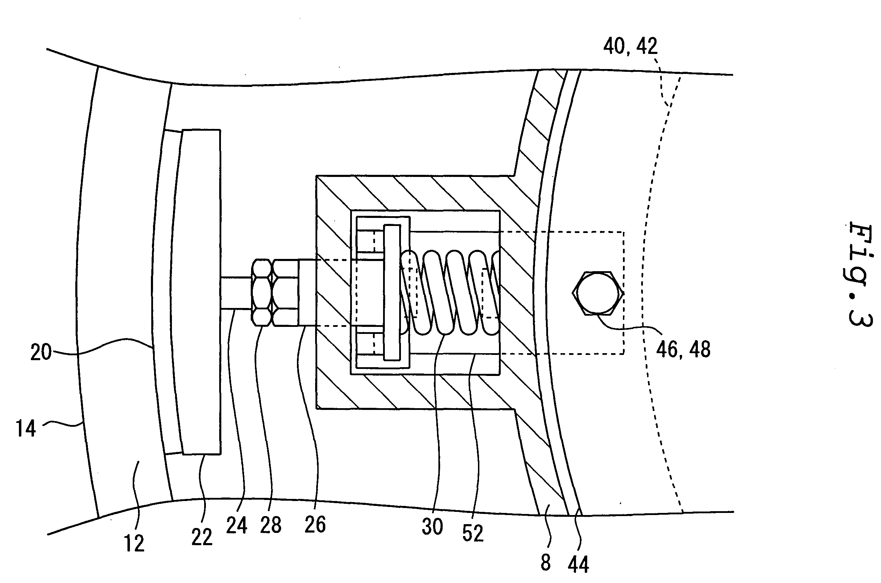

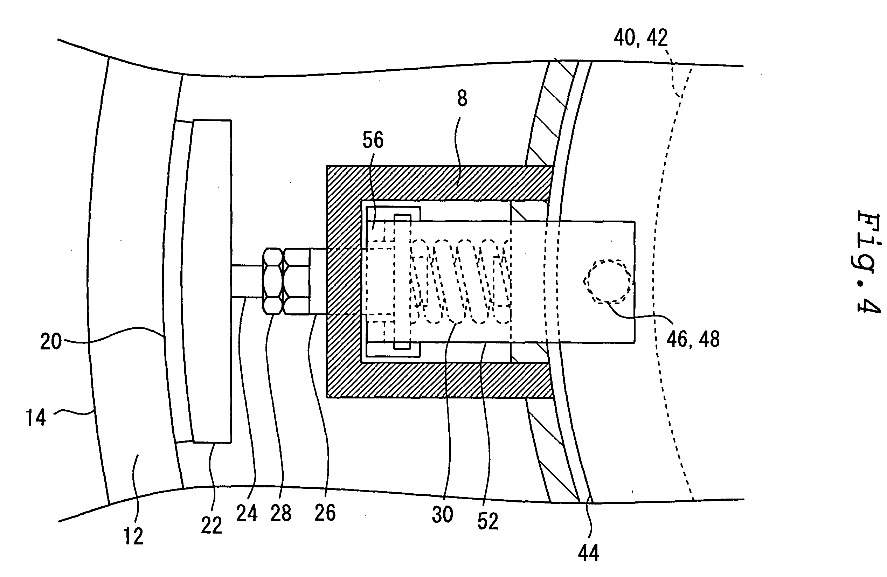

Figure 1 is a schematic sectional view for illustrating a brake mechanism 110 for a traction machine 100 in accordance with the embodiment of the present invention. Figure 2 is a front view for illustrating the brake mechanism for the traction machine. Figures 3 and 4 are schematic sectional views of the brake mechanism for the traction machine shown in Figure 1, taken along line A-A' and line B-B' of Figure 1, respectively. In the figures, portions indicated by dotted lines show see-through portions.

As shown in Figure 1, in the traction machine 100, a brake drum 2 is provided so as to be rotatable around a center shaft 4. The brake drum 2 is housed, together with the center shaft 4, in a housing 6 provided with an open surface on one side, and a part of the open surface is closed by a frame 8.

In this description, the open surface side (lower side in Figure 1) is referred to as the front, and the side opposed to the open surface side (upper side in Figure 1) is referred to as the back.

The brake drum 2 includes a sheave 10 which is rotated by a rope set around it and a drum portion 12 connected to the frond side of the sheave 10. The drum portion 12 is a bowl-shaped element having an open surface on the front side. In the side portion on the inside of the drum portion 12 is provided with a brake surface 14.

Referring to Figures 1 and 2, the brake mechanism 110 is arranged in the drum portion 12 of the brake drum 2.

The brake mechanism 110 has a total of eight brake linings which are provided at equal intervals along the inner peripheral wall of the drum portion 12 so as to face to the brake surface 14. On the surface of each of the brake linings 20, which is opposite to the surface facing to the brake surface 14, a brake shoe 22 is installed.

At the center of the brake shoe 22, a threaded rod 24 is provided. That is, one end of the threaded rod 24 is fixed to the brake shoe 22, and the other end thereof is screwed in a spring support 26.

As shown in Figures 1 to 4, the spring support 26 is formed so that at one end of a hollow cylindrical member, a disk member which has a larger diameter than that of the cylindrical member and is concentric with the cylindrical member is provided, and at the other end thereof, a nut member which is cut into a hexagonal shape and is threaded on the inside is provided. The threaded rod 24 is fixed by this nut member.

A locknut 28 is provided so as to be in contact with the nut member of the spring support 26. The threaded rod 24 passes through the locknut 28. A shift of the threaded rod 24 is prevented by the nut member of the spring support 26 and the locknut 28.

A brake spring 30 is provided so as to be in contact with the disk member of the spring support 26. The brake spring 30 is arranged so that an elastic force acts in the direction such that the brake spring 30 pushes the brake shoe 22 perpendicularly toward the braking member side. Specifically, as shown in Figure 2, the brake spring 30 is arranged in a radial direction connecting the center shaft 4 to the brake lining 20. The spring support 26 connecting the brake spring 30 to the brake shoe 22, the locknut 28, and the threaded rod 24 are also arranged along this direction. The face of the brake spring 30, which is opposite to the face being in contact with the spring support 26, is fixed to the frame 8.

In the center of the drum portion 12 is provided a spline 40. The spline 40 consists of a cylindrical portion arranged so as to surround the center shaft 4 and doughnut-shaped plates arranged concentrically with the cylindrical portion, and is formed so that the cylindrical portion is combined with the doughnut-shaped plates in such a manner of substantially perpendicularly penetrating the center of the doughnut-shaped plates. Also, an electromagnet 42 is housed in the spline 40. A wire of the electromagnet 42 is wound around the cylindrical portion of the spline 40 between the two doughnut-shaped plates.

In the state shown in Figures 1 to 4, no current flows in the electromagnet 42. That is to say, in this state, the brake for the traction machine 100 is operated. In this description, the state in which the brake is operated in this manner is referred to as an unexcited state, and the state in which a voltage is applied to the electromagnet 42 and the brake is released is referred to as an excited state.

An armature 44 is arranged movably so as to face to the electromagnet 42. The armature 44 is a doughnut-shaped iron plate, and in a hole in the center thereof, the center shaft 4 and a cylindrical portion of the spline 40 covering the center shaft 4 pass through substantially perpendicularly. The armature 44 can move in an axial direction of the center shaft 4.

Near the outer periphery of the armature 44, a total of eight screws 46 are arranged at positions corresponding to the brake springs 30, that is, on the radial lines connecting the center shaft 4 to the brake springs 30. The screw 46 perpendicularly penetrates the armature 44, and is fixed to the armature 44 by a nut 48.

A lever 50 is arranged so that the end portion thereof is in contact with the tip end of the screw 46. Specif ically, the end portion of the lever 50 is in contact with the tip end of the screw 46 projecting from the armature 44 toward the back side.

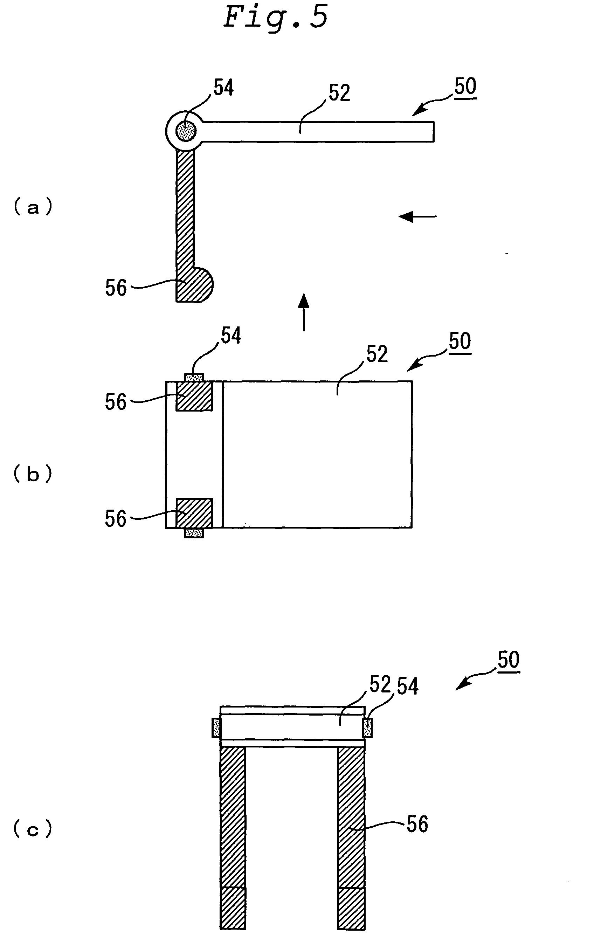

Figure 5 is a schematic view for illustrating a lever portion. Figure 5(a) is a sectional view, Figure 5(b) is a view taken from the downside of Figure 5(a), and Figure 5(c) is a view taken from the right side of Figure 5(a).

As shown in Figure 5, the lever 50 includes a lever support portion 52, a rotating pin 54, and two lever tip end portions 56, and has an L shape in the sectional view.

The lever support portion 52 is a rectangular plate when viewed from the front side in the case of being assembled to the brake mechanism 110. A portion near the center of one side (right-hand side in Figures 5(a) and 5(b)) of sides perpendicular to the lengthwise direction of the lever support portion 52 is in contact with the tip end of the screw 46. On the side opposed to this one side is provided the rotating pin 54.

At both ends of the side on which the rotating pin 54 is provided, the two lever tip end portions 56 are connected so as to be perpendicular to the lever support portion 52 and be parallel with each other. One end of the lever tip end portion 56 is connected to the lever support portion 52 and is fixed substantially perpendicularly, and the other end thereof is machined so as to be thick and in a semispherical shape, being arranged so that this semispherical portion comes into contact with the face of the disk member of the spring support 26, which is reverse to the face contacting with the brake spring 30, as shown in Figures 1 to 4. In the unexcited state, as shown in Figure 1, the lever tip end portion 56 comes into contact with the disk member of the spring support 26 in parallel with each other.

The lever 50 constructed as described above can be turned around the rotating pin 54.

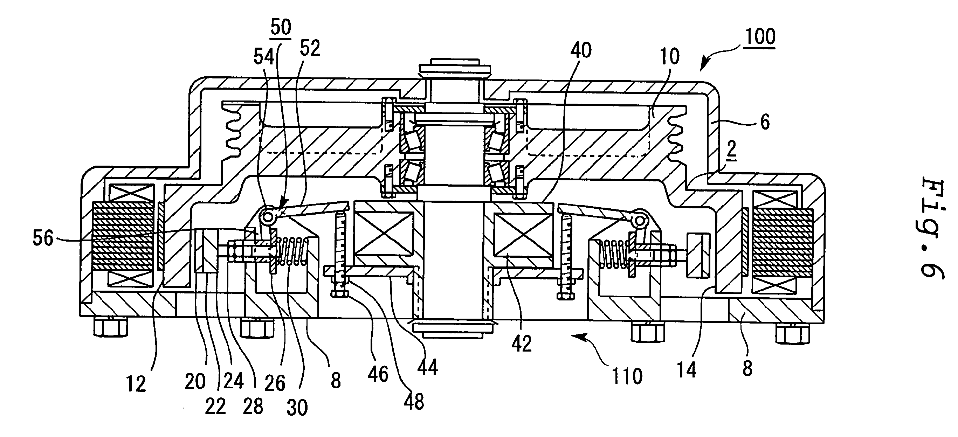

Figure 6 is a schematic sectional view for illustrating the excited state in which the brake is released in the embodiment of the present invention, which shows the cross-sectional portion corresponding to Figure 1.

Next, operation of the brake mechanism 110 will be described in detail with reference to Figures 1 to 6.

In the unexcited state, no current flows in the electromagnet 42.

In this state, the disk member of the spring support 26 receives an elastic force of the brake spring 30, which is directed toward the brake shoe 22. Thereby, the outward elastic force is transmitted to the threaded rod 24 screwed in the spring support 26, so that the brake shoe 22 and the brake lining 20 are pressed on the brake surface. In this state, therefore, the brake drum 2 is in a state of being incapable of rotating, and hence the brake is in a state of being applied.

At this time, the lever tip end portion 56 is pushed by the disk member of the spring support 26, and receives the elastic force directed toward the brake shoe 22. Also, the lever 50 can be turned along a plane which is horizontal to the axial direction of the center shaft 4 with the rotating pin 54 being used as a supporting point. Therefore, the outward elastic force received by the lever tip end portion 56 is transmitted to the lever support portion 52 as a force for moving the lever support portion 52 fixed perpendicularly to the lever tip end portion 56 toward the front side. When the frontward force acts on the lever support portion 52, the end portion of the lever support portion 52, which is in contact with the screw 46, pushes the screw 46 toward the front side. Thereby, the armature 44 fixed on the opposite side of the screw 46 is also pushed toward the front side, and rests in a state in which a predetermined distance is provided between the armature 44 and the electromagnet 42. In the unexcited state, since no current flows in the electromagnet, a force for attracting the armature 44 to the electromagnet 42 does not act.

Next, a case where the unexcited state changes to the excited state, that is, a case where a current is allowed to flow in the electromagnet 42 will be explained.

When a voltage is applied to the electromagnet 42 and a current begins to flow, an attraction force for attracting the armature 44 to the electromagnet 42, that is, to the back side acts on the armature 44. When the backward force acts on the armature 44, the backward force is also applied to the screw 46 fixed to the armature 44. This backward force is transmitted to the tip end portion of the lever support portion 52, which is in contact with the screw 46. The force pushing the lever support portion 52 toward the back side is transmitted as a force for rotating the lever 50 with the rotating pin 54 being used as a supporting point. Thereby, this force is transmitted to the lever tip end portion 56 arranged perpendicularly to the lever support portion 52 as a force for pushing the lever tip end portion 56 toward the side opposite to the brake shoe 22, that is, toward the center shaft 4. Therefore, the lever tip end portion 56 pushes back the brake spring 30 toward the center shaft 4 in the portion in which the lever tip end portion 56 is in contact with the brake spring 30. When the force pushing back the brake spring 30 becomes larger than the spring force of the brake spring 30, the brake spring 30 contracts, and in association with this, the spring support 26, the locknut 28, and the threaded rod 24 are pulled back toward the center shaft 4. Accordingly, the brake shoe 22 and the brake lining 20 fixed to the threaded rod 24 are pulled toward the center shaft 4, so that the contact of the brake lining 20 with the brake surface 14 is broken off. Thus, a state in which the brake drum 2 is rotatable, that is, a state in which the brake is released is established.

The spring force of the brake spring 30 can be adjusted by turning the locknut 28, which fixes the threaded rod 24 to the spring support 26, and thus changing the position of the locknut 28. Also, the locknut 28, the spring rod 24, and the brake spring 30 are independently provided on each of the brake shoes 22. Therefore, the spring force of each of the brake springs 30 can be adjusted independently. Specifically, the force of the brake lining 20 pushing the brake surface 14 can be set for each of individual brake linings 20. In this embodiment, the positions of the locknuts 28 are adjusted so that the forces of the brake linings 20 pressing the brake surface 14 are equal.

Also, the distance between the armature 44 and the electromagnet 42 can be adjusted by adjusting the position of the nut 48 that connects the armature 44 to the lever 50. Also, each of the levers 50 is independently connected to the armature 44 by the screw 46 and the nut 48. Therefore, the distance between the armature 44 and each of the levers 50 can be adjusted independently. In this embodiment, the nuts 48 are adjusted considering the positions etc. of the levers 50, by which the distance between the armature 44 and the electromagnet 42 is set so that the armature 44 and the electromagnet 42 are parallel with each other with the necessary minimum clearance being provided therebetween.

As described above, in this embodiment, a total of eight brake linings 20 and the brake shoes 22, the brake springs 30, and the like joined to the brake lining 20 are provided so as to face to the brake surface 14, and braking forces are given to individual brake linings 20 by the independent brake springs 30. Therefore, the necessary braking force can be distributed to the pressing forces for the brake linings 20, so that the braking force given to each of the brake linings 20 can be decreased. Thereupon, the brake spring 30 can be made thin and small in size, and thereby the brake mechanism and hence the whole of the traction machine using the brake mechanism can be made thin and small in size. Also, since the braking force borne by each of the brake linings 20 can be decreased, the collision noise generated when the brake lining 20 collides with the brake surface 14 can be restrained. Therefore, the quietness of the elevator system can be achieved.

The brake lining 20 is configured so as to receive the braking force perpendicularly from the brake spring 30 arranged perpendicularly, so that the brake lining 20 and the brake surface 14 can be arranged in parallel with each other with the necessary minimum clearance being provided therebetween. Therefore, the collision noise generated when the brake lining 20 collides with the brake surface 14 can be restrained to some degree.

The attraction force applied to the armature 44 is transmitted so as to resist the spring force of the brake spring 30 by changing the direction through 90 degrees by the rotating pin 54 at the corner of the L shape in cross section. By this construction, the wire of the electromagnet 42 can be wound around the center shaft 4. Therefore, the electromagnet 42 can be made thin and small in size, and thereby the brake mechanism 110 and hence the traction machine 100 can be made small in size. Also, since the electromagnet 42 can be made thin and small in size in this manner, the power consumption can be decreased.

In this embodiment, explanation has been given of the case where a total of eight brake linings 20 are provided. However, in the present invention, the number of brake linings is not limited to eight, and any proper number of brake linings may be provided considering the size of the traction machine, the necessary braking force, and the like. Even if two brake linings are provided as in the conventional traction machine, the braking force can be transmitted directly from the brake spring to the brake lining in the perpendicular direction, so that the brake lining and the brake surface can be kept parallel with each other with the necessary minimum clearance being provided therebetween. Therefore, the collision noise can be reduced, and thus the quietness can be achieved to some degree. However, considering the downsizing of the traction machine and further reduction in noise, it is preferable that more than two brake linings be provided.

In this embodiment, explanation has been given of the case where the brake linings 20 are arranged at equal intervals. However, in the present invention, the brake linings need not be arranged regularly if consideration is given to securing the necessary braking force.

In this embodiment, the brake spring 30, the spring support 26, the threaded rod 24, and the locknut 28 for fixing the threaded rod 24 are used as a mechanism for transmitting the braking force to the brake shoe 22. However, in the present invention, the mechanism is not limited to this. For example, the braking force need not necessarily be generated by the brake spring 30, but may be generated by any other elastic member. Also, the spring support 26 or the like need not be used for the connection between the brake spring 30 and the brake shoe 22, and a proper connecting element may be selected so as to match the elastic member used.

In this embodiment, explanation has been given of the case where the spring support 26, the threaded rod 24, and the locknut 28 for fixing the threaded rod 24 are used, whereby the braking force is regulated. However, the present invention is not limited to this configuration. The brake force may be regulated by any other regulating method, for example, by shifting the fixing position of the brake spring 30 in the end portion on the opposite side to the spring support 26. Also, such regulating means need not be provided especially.

In this embodiment, the electromagnet 42, the armature 44, and the lever 50 connected to the armature 44 are used as a mechanism for releasing the brake against the spring force of the brake spring 30. However, in the present invention, the resisting force need not be generated by such a mechanism, and the spring force of the brake spring 30 may be restrained by any other means.

In this embodiment, explanation has been given of the case where the lever 50 is formed into an L shape in cross section to change the direction of attraction force through 90 degrees so as to resist the spring force of the brake spring 30. However, the present invention is not limited to this configuration. The shape and arrangement of the lever may be selected so that the attraction force is transmitted in a proper direction considering the attracting direction of the electromagnet, the direction in which the braking force of the brake spring acts, the position at which the lever can be arranged in the brake drum, or the like.

The lever 50 and the armature 44 are connected to each other by the screw 46 and the nut 48. Thereby, the distance between the armature 44 and the electromagnet 42 can be adjusted. In the present invention, however, the adjustingmeans for the distance is not limited to such a mechanism. The distance between the armature 44 and the electromagnet 42 may be adjusted by any other means. Also, such adjusting means need not be provided especially.

In the present invention, a braking member corresponds to, for example, the brake lining 22 in the embodiment, an elastic member corresponds to, for example, the brake spring 30, and a supporting member corresponds to, for example, the frame 8. Also, in the present invention, a control mechanism corresponds to, for example, the electromagnet 42 and the lever 50.

Also, in the present invention, an elastic force regulating member corresponds to, for example, the threaded rod 24, the spring support 26, and the locknut 28 in this embodiment, and an elastic force regulating bolt corresponds to the threaded rod 24, and an elastic force regulating nut corresponds to the locknut 28.

Further, in the present invention, an electromagnet corresponds to, for example, the electromagnet 42 in this embodiment, a movable member corresponds to, for example, the armature 44 and the lever 50, and a movable disk portion and an arm portion correspond to the armature 44 and the lever 50, respectively.

Still further, in the present invention, a movable disk portion adjusting member corresponds to, for example, the screw 46 and the nut 48 in the embodiment, and a movable disk portion adjusting screw and a movable disk portion adjusting nut correspond to the screw 46 and the nut 48, respectively.

### Industrial Applicability

As described above, in the present invention, a plurality of braking members are provided so as to correspond to a brake surface, and each of the braking members is provided with an elastic member for giving a braking force. Therefore, the braking force borne by each of the braking member can be decreased as compared with the conventional brake mechanism, by which the elastic member, an electromagnet, or the like can be made smaller in size. Also, collision noise generated when the braking member collides with the brake surface can be reduced. Therefore, the present invention is useful for a brake system, and can especially be applied effectively to a brake system used in a traction machine for an elevator system.

## Claims

1. A brake mechanism for a traction machine comprising:
a plurality of braking members arranged so as to face to an internal wall of a bowl-shaped portion of a brake drum whose one surface is open;
an elastic member which is connected to each of said braking members and is arranged so that an elastic force acts in a radial direction from the center of said bowl-shaped portion and in the direction such that said braking member is pressed on the internal wall of said bowl-shaped portion;
a supporting member for fixing a portion of said elastic member, said portion being opposite to a portion in which said elastic member is connected to said braking member; and
a control mechanism for controlling said elastic force by generating a resisting force opposing to said elastic force.

2. The brake mechanism for a traction machine according to claim 1, wherein said elastic members are arranged independently with respect to said braking members to develop an elastic force individually.

3. The brake mechanism for a traction machine according to claim 1 or 2, wherein that said brake mechanism for a traction machine further comprises an elastic force regulating member for regulating the intensity of said elastic force.

4. The brake mechanism for a traction machine according to claim 3, wherein,
said elastic member is a spring;
said elastic force regulating member includes an elastic force regulating bolt arranged perpendicularly to the direction in which the elastic force of said spring acts and an elastic force regulating nut; and
said elastic force is regulated by adjusting the position of said elastic force regulating nut.

5. The brake mechanism for a traction machine according to any one of claims 2 to 4, wherein said control mechanism comprises:
said electromagnet; and
a movable member which is moved by the attraction and release of said electromagnet and transmits the attraction force to said elastic member as said resisting force.

6. The brake mechanism for a traction machine according to claim 5, wherein,
said movable member comprises:
a movable disk portion which is arranged so as to face to said electromagnet with a predetermined clearance being provided therebetween, and is moved by the attraction and release of said electromagnet; and
an arm portion one end of which is connected to said movable disk portion and the other end of which is connected to said elastic member,
said arm portion being operated in association with said movable disk portion to transmit said resisting force to said elastic member.

7. The brake mechanism for a traction machine according to claim 6, wherein,
a wire of said electromagnet is wound in the direction of a concentric circle with respect to a center shaft of said brake drum,
said movable disk portion is arranged in the direction of a concentric circle with respect to said center shaft, and
said arm portion is formed into an L shape in cross section so as to transmit the attraction force between said electromagnet and saidmovable disk portion as a resisting force by changing the direction of attraction force.

8. The brake mechanism for a traction machine according to claim 6 or 7, wherein said control mechanism further comprises a movable disk portion adjusting member capable of adjusting the distance between said movable disk portion and said electromagnet.

9. The brake mechanism for a traction machine according to claim 8, wherein,
said movable disk portion adjusting member includes a movable disk portion adjusting screw connecting said movable disk portion to said arm portion, and a movable disk portion adjusting nut, and
the distance between said movable disk portion and said electromagnet is adjusted by changing the position of said movable disk portion adjusting nut.
